# EUROPEAN PATENT APPLICATION

(11) **EP 3 306 276 A1**
(43) Date of publication of application: **11.04.2018**
(21) Application number: 17194687.4
(22) Date of filing: 04.10.2017
(51) Int. Cl.: G01F 1/11, G01F 1/20, G01F 1/28

(54) **IMPROVED METER FOR MEASURING THE FLOW RATE OF AERIFORM SUBSTANCES AND METHOD FOR MEASURING THE FLOW RATE OF AERIFORM SUBSTANCES WITH SAID METER**

(30) Priority: 05.10.2016 IT 201600099999
(71) Applicant: Ideal Clima S.r.l., 25135 Brescia (BS) (IT)
(72) Inventor: RUFFINI, Vittorio, 25121 BRESCIA (BS) (IT)
(74) Representative: Bonatto, Marco

(57) **Abstract**

A flow meter for aeriform substances (**1**), comprising A) a meter body (**3**) in which a measurement duct (**5**) is obtained; B) a fan (**7**) housed in the measurement duct (**5**) and rotating on itself around a predetermined rotation axis (AR) longitudinal to the measurement duct (**5**); C) an elastic element (**9**). The flow of a fluid flowing in the measurement duct (**5**) applies an overall torque to the fan (**7**), such torque tending to rotate the fan (**7**) around the predetermined rotation axis (AR) deforming the elastic element (**9**), and the latter being deformed counters such a rotation. The moving pointer (**13**) is positioned along the graduated scale (**17**) in equilibrium between elastic force and aerodynamic force. The meter (**1**) comprises a first fan holder pin (**10, 10**") in which the maximum diameter is equal to or less than **4** millimetres and/or **0.08** times the maximum diameter of the fan (**7**).

## Description

### Field of the invention

The present invention relates to a tool for measuring flow rates of air or other aeriform substances that can be used for example, for measuring the flow rates running through the ducts of ventilation, heating and conditioning systems to regulate and fine-tune such systems.

### Background art

Ventilation systems introduce or extract air into/from rooms and into/from other environments through ducts having variable diameter which bring the air to the vents.

The air flow rates are to be distributed based on the actual need of each environment.

In order to do this, the installer of the system is to accurately know the flow that crosses each duct.

In the field of ventilation, heating or conditioning systems, there are currently known and used relatively sophisticated tools which, by taking advantage of the various physical effects, such as for example, calibrated orifices, capillary tubes, heat transfers, are capable of measuring the flow rates of air in the ducts with great accuracy.

The author of the present invention however feels that these tools are extremely complicated to use and are costly.

To obviate the drawbacks mentioned above and provide a tool for measuring flow rates of air in the ducts of ventilation, heating and conditioning systems that is simpler to use and more affordable to manufacture, the Applicant has developed the flowmeters described in Italian Patent Application MI2014A000765 and European Patent Application EP15164675**.**

A second object of such meters of the Applicant was to allow the flow rates of air running through the different ducts of a ventilation system, in particular in the case of several air ducts fed in parallel by a common collector, to be measured quickly and affordably.

An object of the present invention is to supply a tool for measuring flow rates of air in the ducts of ventilation, heating and conditioning systems that is more accurate than the one described in Italian Patent Application MI2014A000765 and European Patent Application EP15164675**,** while remaining a relatively simple and affordable tool.

### Summary of the invention

In a first aspect of the present invention, the first object is achieved with a flow meter having the features according to claim **1.**

In a particular embodiment of the meter according to the invention, the first (**74**) and the second stretch (**76**) in the plan development of a blade are inclined with respect to each other so as to substantially form an L form, that is an elbow form, each has an approximately rectangular, square or trapezoidal form and the second stretch (**76**) is more enlarged with respect to the first stretch (**74**), and has an average width (WP**2**) comprised between **2-3** times the average width (WP**1**) of the first stretch (**74**).

In a particular embodiment of the invention, the meter (**1**, **1'**, **1"**, **1**^{III}) comprises:
- a plurality of moving pointers (**13**) integral with the fan or the body (**3**) of the meter;
- a plurality of graduated scales or other sets of references (**17**), where each graduated scale or set of references (**17**) is integral with the body (**3**) of the meter or with the fan, respectively;
   and each moving pointer (**13**) is arranged to be positioned along the relative graduated scale or along the other set of references (**17**) as a function of the position (γ) the fan (**7**) takes at equilibrium between the drive torque applied to the fan (**7**) by the flow of aeriform fluid that runs through the measurement duct (**5**), and the resistance torque applied to the fan (**7**) by the elastic element (**9**).

In this case, each graduated scale or other set of references (**17**) may possibly be angularly offset, with reference to the rotation axis of the fan (**7"**) or of the measurement duct (**5**), with respect to a graduated scale or other adjacent set of references (**17**), by an angle (γ, gamma) equal to or greater than **10°.**

In a particular embodiment of the invention, the body (**3**, **3**^{III}) is completely or at least partially transparent so as to allow the movements of the moving pointer (**13**) with respect to the graduated scale or other set of references (**17**), to be seen from the outside.

In a particular embodiment of the invention, the fan (**7**) comprises a plurality of blades (**70**), each of which lies at least partly in a surface inclined with respect to the predetermined rotation axis (AR).

In a particular embodiment of the invention, the fan (**7**) comprises a plurality of blades (**70**), each of which extends at least in radial direction with respect to the predetermined rotation axis (AR).

In a particular embodiment of the invention, the fan (**7**) comprises a hub (**72**) to which a plurality of blades (**70**) is fixed, each blade (**70**) comprises a first stretch (**74**) closer to the hub (**72**) and which extends in a direction substantially perpendicular to the predetermined rotation axis (AR), and a second stretch (**76**) further from the hub (**72**) and which substantially extends in a direction inclined with respect to the first stretch (**74**).

In a particular embodiment of the invention, in at least part of the blades (**70**), the radially outermost cord (AC) has an inclination (α) equal to or greater than **40°,** more preferably equal to or greater than **45°,** and even more preferably equal to or greater than **50°.**

In a particular embodiment of the invention, the elastic element (**9**) comprises a spiral spring.

In a particular embodiment of the invention, the body (**3**) is completely or at least partially transparent so as to allow the movements of the fan (**7**) to be seen from the outside.

In a particular embodiment of the invention, the body (**3**) forms two open ends in which the measurement duct (**5**) exits, and the cross sections of the measurement duct (**5**) at such open ends have maximum diameters or widths (D**2**, D**3**) comprised between **0.7-1.5** times the maximum diameters or widths of the cross sections of the innermost stretches of the measurement duct (**5**).

In a second aspect of the present invention, the second object is achieved with a system having the features according to claim **10.**

In a third aspect of the present invention, the first object is achieved with a process for measuring the flow rate of a aeriform fluid having the features according to claim **11.**

In a fourth aspect of the present invention, the first object is achieved with a process for manufacturing a meter of the type described above, having the features according to claim **12.**

In a fifth aspect of the present invention, the first object is achieved with a process for manufacturing a meter of the type described above, having the features according to claim **14.**

Further features of the device are the subject of the dependent claims.

The advantages achievable with the present invention will be more apparent to the man skilled in the art from the following detailed description of some particular non-limiting example embodiments, illustrated with reference to the following diagrammatical drawings.

### LIST OF FIGURES

Figure **1** shows an exploded perspective view of a flow meter according to a first particular embodiment of the invention;
Figures **2** and **3** respectively show a perspective view and a side view of the fan of the meter of Figure **1****;**
Figure **4** shows a perspective view of a flow meter according to a second particular embodiment of the invention;
Figure **5** shows a perspective view of a flow meter according to a third particular embodiment of the invention;
Figure **6** shows a side view of the fan of the meter of

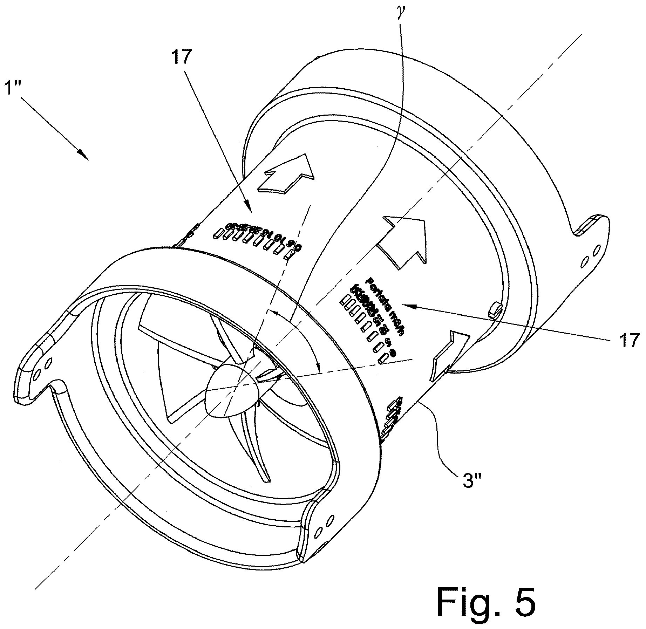

Figure **5****,** according to a direction perpendicular to the rotation axis;

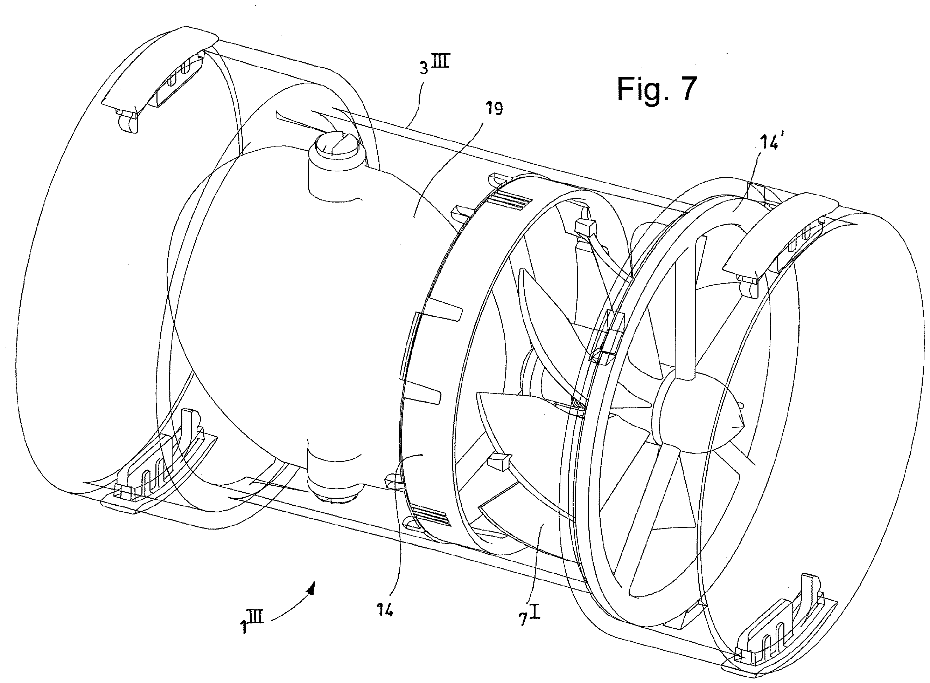

Figure **7** shows a perspective view of a flow meter according to a fourth particular embodiment of the invention;

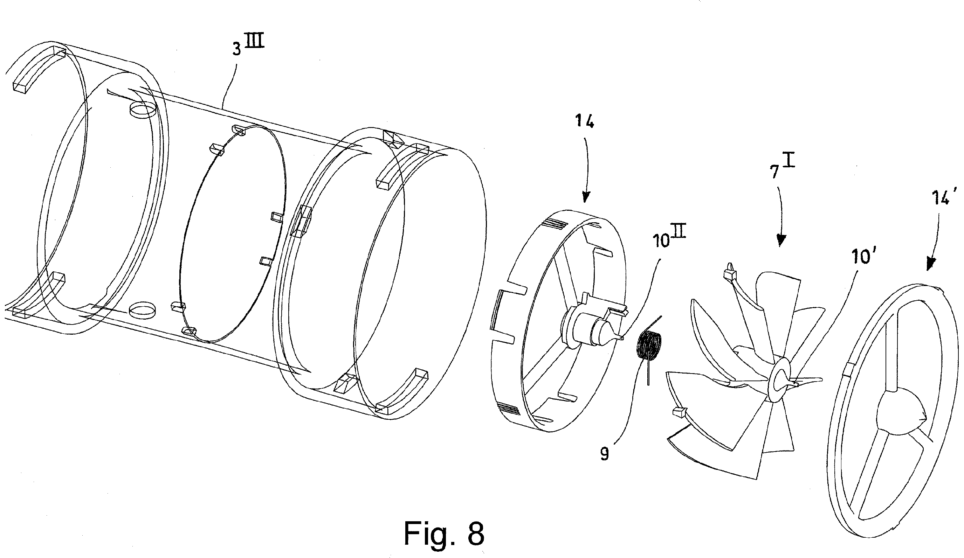

Figure **8** shows an exploded perspective view of the meter of Figure **7****;**

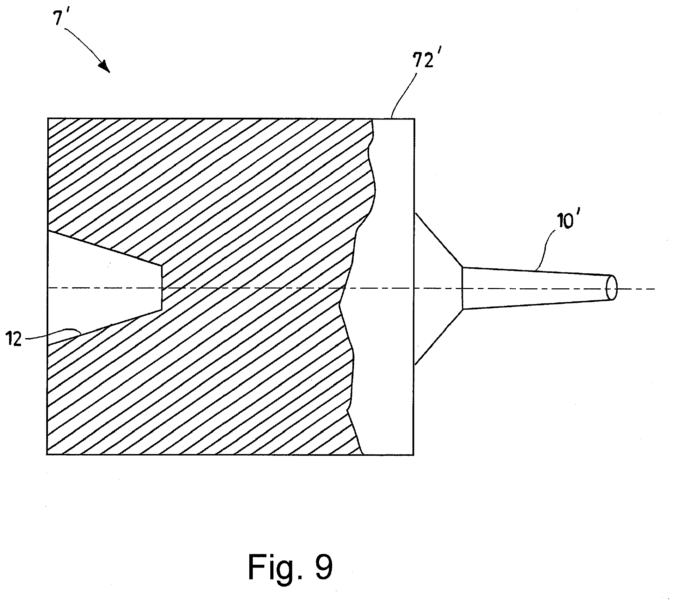

Figure **9** shows a partially sectioned view of the hub of the fan of the meter of Figure **7****,** according to a direction perpendicular to the rotation axis of the fan;

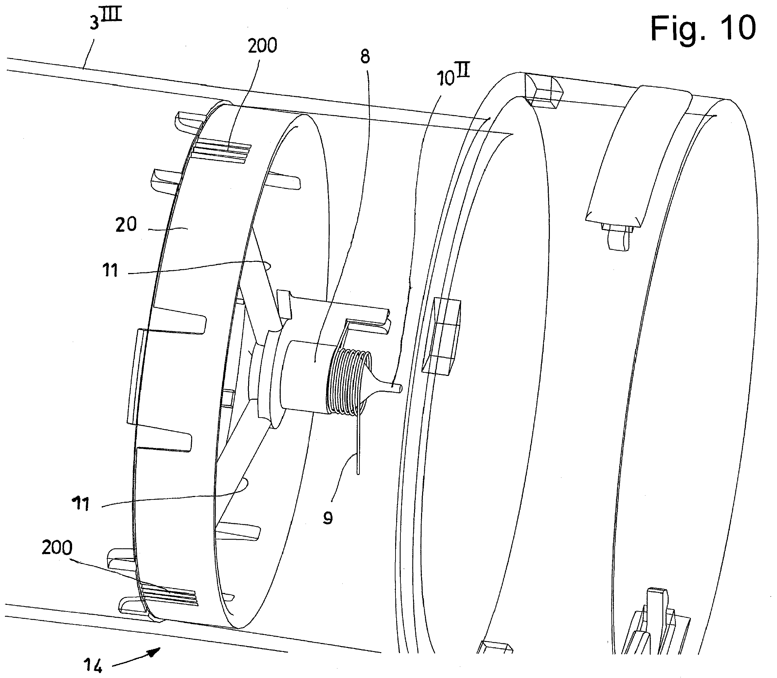

Figure **10** shows a perspective view of the first hub holder frame of the meter of Figure **7****;**

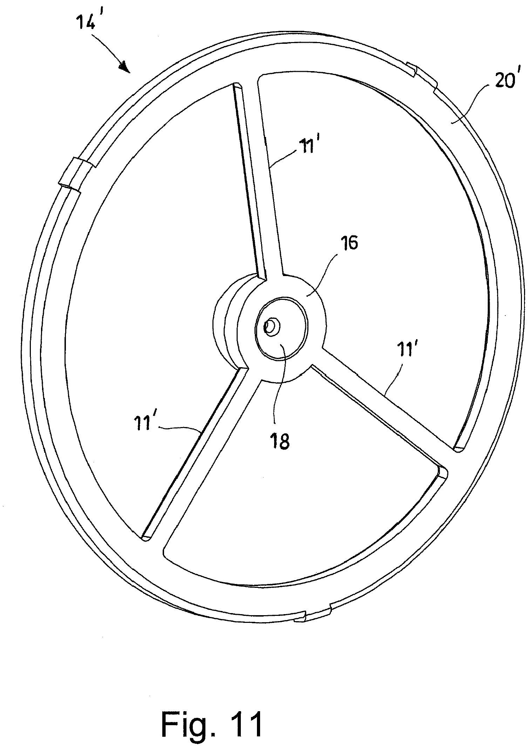

Figure **11** shows a perspective view of the second hub holder frame of the meter of Figure **7****;**

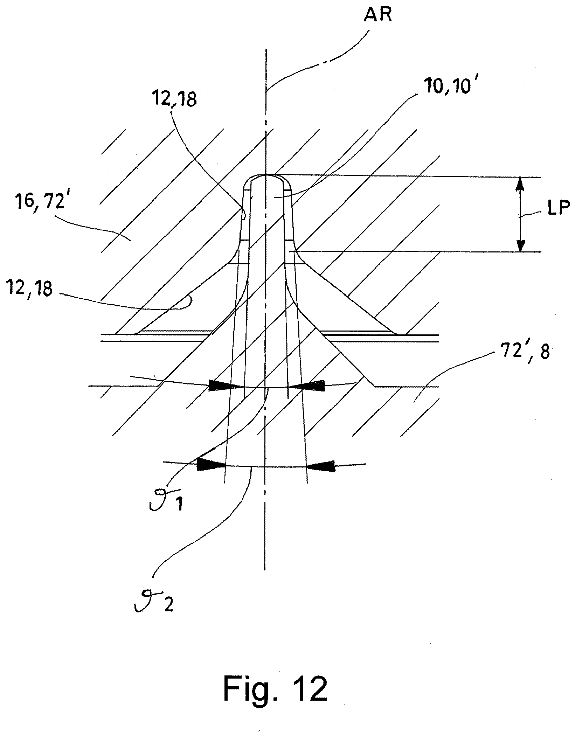

Figure **12** shows a detail of a partially sectioned view of the first (**10**) or of the second fan holder pin (**10'**) of the meter of Figure **7****,** according to a section plane passing through the rotation axis of the fan;

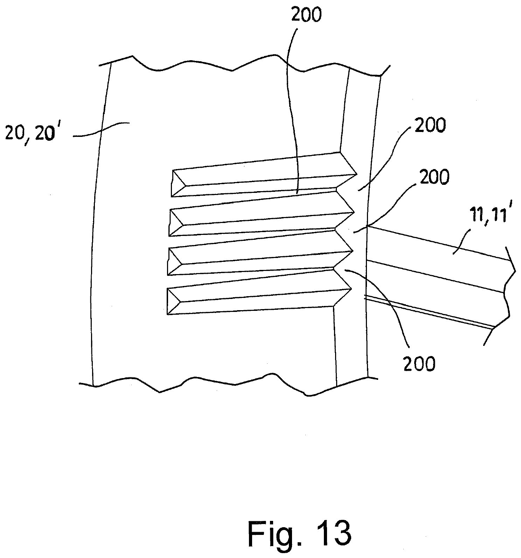

Figure **13** shows a perspective view of a detail of the fixing band or ring of the first or of the second hub holder frame (**14'**) of the meter of Figure **7****;**

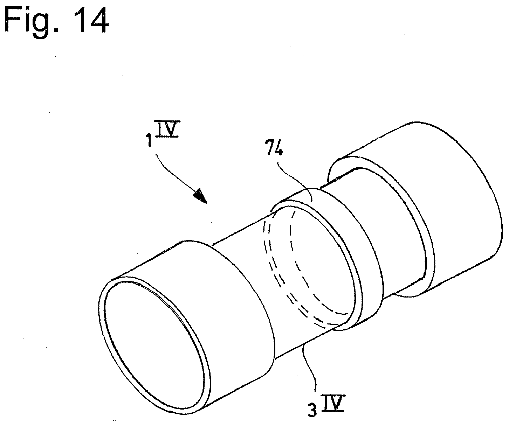

Figure **14** shows a perspective view of a flow meter according to a fifth particular embodiment of the invention.

### Detailed description

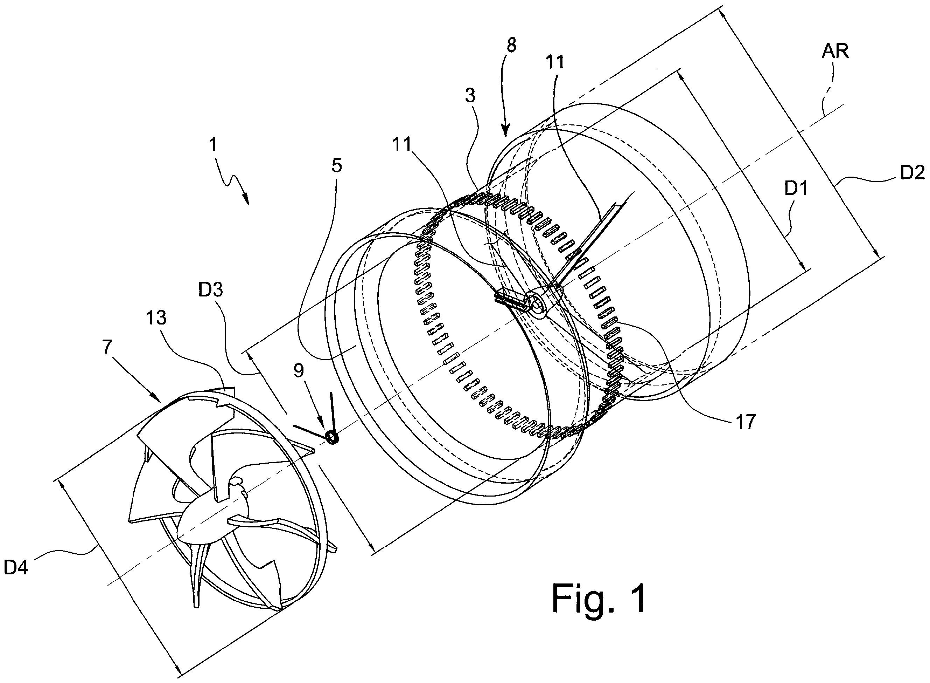

Figures **1-3** are relative to a flow meter of air or other aeriform substances according to a first particular embodiment of the invention, indicated as a whole with reference numeral **1.** Meter **1** comprises:
- a meter body **3,** of overall tubular form, in which a measurement duct **5** is obtained;
- a fan **7** housed in the measurement duct **5** and arranged to rotate on itself around a predetermined rotation axis AR parallel, or in any case longitudinal, to the measurement duct **5** or in any case to the average direction of the aeriform fluid flowing in such duct.

Advantageously, the inner walls of the body **3** define a measurement duct **5,** which narrowest passage section has a surface equal to or greater than **12** square centimetres, preferably equal to or greater than **19** square centimetres, even more preferably equal to or greater than **27** square centimetres.

The measurement duct **5** preferably has rectilinear axis.

The measurement duct **5** preferably has cross sections of substantially circular form.

Preferably, the cross sections of the measurement duct **5** have a diameter or a maximum width equal to or greater than **4** centimetres, more preferably **5** centimetres, and even more preferably **6** centimetres.

Preferably, the meter **1** comprises also an elastic element **9,** and the meter **1** is arranged so that the flow of air or of a aeriform fluid flowing in the measurement duct **5** applies an overall drive torque to the fan **7,** such torque tending to rotate the fan around the axis AR stressing and deforming the elastic element **9** so that the latter counters such rotation or tendency to rotation.

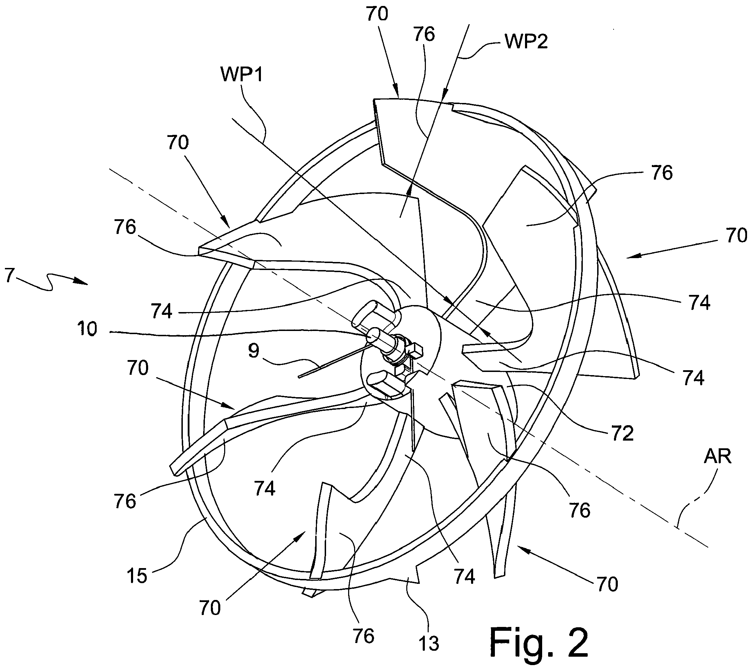

Preferably, the fan **7** comprises a plurality of blades **70,** each of which lies at least partly in a surface inclined with respect to the rotation axis AR (Figure **2**).

The blades **70** may extend in radial directions with respect to the axis AR and/or to a hub **72** to which they are fixed.

As shown in Figures **1 to 6****,** each of the blades **70** may comprise a first stretch **74** closer to the hub **72** which extends in a direction substantially perpendicular to the rotation axis AR, and a second stretch **76** further from the hub which extends in a direction inclined with respect to the first stretch **74,** for example forming with it substantially an L form, that is an elbow form.

As shown in the accompanying figures, the first **74** and the second stretch **76** may have approximately rectangular, square or trapezoidal forms.

Preferably, also in the plane development of the blades **70,** the second stretch **76** extends in a direction perpendicular, or in any case inclined, with respect to the first stretch **74.**

Advantageously, in the plane development of the blades **70,** the second stretch **76** is more enlarged with respect to the first stretch **74,** and has a greater average width WP**2** with respect to the one WP**1** of the first stretch.

For example, the average width WP**2** of the second stretch **76** may be comprised between **2-3** times the average width WP**1** of the first stretch **74.**

The average width WP**2** may be comprised between **0.2-0.4** times the maximum outer diameter of the fan.

Preferably, the second stretch **76** of each blade **70** lies on a surface overall inclined with respect to the rotation axis AR of the fan **7.**

With reference to the theory of aerofoils, cord AC is intended the straight line that ideally joins the attachment edge and the outlet edge of each blade **70.**

The cords of the blades **70** are considered with reference to sections according to planes parallel to the rotation axis AR and perpendicular to the surface in which each blade lies as a whole.

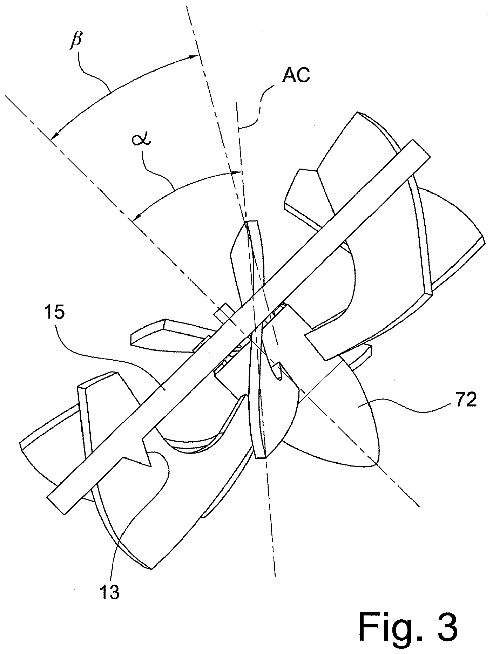

Preferably, the outermost cord AC in radial direction in each blade is inclined by an angle α (alpha) equal to or greater than **40°,** more preferably equal to or greater than **45°,** and even more preferably again equal to or greater than **50°,** so as to reduce the head losses generated by the fan during the measurements and to affect less the flow itself to be measured (Figure **3**).

To this end, each blade **70** preferably is twisted, and the angles α of the cords AC progressively increase as the cross sections of the blades in which the cords are considered move away from the rotation axis AR.

Preferably, the angle α of inclination of the cords AC at or close to the attachment zone of the blades **70** to the hub is comprised between **0°-20°,** and more preferably is comprised between **2°-8°.**

In any case, preferably the angle of attachment β [beta] of each blade **70** advantageously is less than **90°.**

Advantageously, each blade substantially has parabola-shaped cross sections (Figures **7-13**) close to the outer edge thereof, with a slight S form, that is a double curve (Figures **1-6**), with a first portion with concavity facing upstream and a second portion with concavity facing downstream (Figure **3**): such form helps re-accompany the flow of air, after it laps the blade, in the direction it had originally before lapping the blade, thus avoiding to create negative pressures and stall areas that would reduce the mechanical efficiency of the fan.

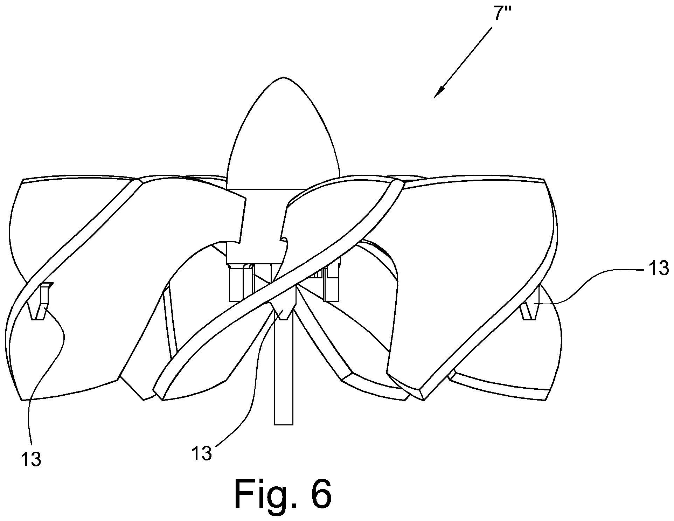

As shown in Figures **6-12****,** each blade **70** may have a substantially triangular overall shape or triangular plan development.

The fan **7** is fixed to a shaft so as to rotate around the axis AR, and such shaft may be fixed to the rest of the meter **1** and held in position in the measurement duct **5** for example by means of a suitable first hub holder **8** in turn fixed to one or more arms **11** which extend through the duct itself (Figure **1**).

The elastic element **9** may consist of or comprise a spiral spring, preferably of the type which in normal operating conditions works mainly by bending rather than by twisting.

An example of a similar spring is shown in Figure **2****:** it is formed by a spiral-wound harmonic steel wire.

The ends of the wire lean against a convenient shoulder respectively of the hub **72** and of the first **8** or the second hub holder **16.**

Advantageously, a pointer **13** is indicated on the rotor which allows measuring or visually inspecting the angular position of the rotor **7** with respect to the meter body **3** and/or to the duct **5,** with reference to the rotation axis AR.

The pointer **13** may be for example a mechanical finger, a hand, a notch, a boss or a coloured mark.

The pointer **13** may be fixed to a diametrical band **15** which surrounds the blades, fixing the outer ends thereof and stiffening them.

Correspondingly, on the body **3** of the meter there preferably is indicated a graduated scale, or in any case a second series of references **17** to/at which the pointer **13** overlaps or with which collimates, thus allowing to measure the angular position of the fan **7.**

The pointer **13** and each reference of the graduated scale or of the second set of references may for example be a mechanical finger, a hand, a notch, a boss, or a coloured mark.

To this end, the body of the flow meter **3** may be completely or partially transparent, or again be provided with a suitable window which allows seeing the pointer **13** from the outside of the body **3.**

The window may be a simple opening in an opaque wall of the body **3** or may be for example, closed by a transparent or translucent material.

When the body of the flow meter is partially transparent, the transparent portion preferably forms a band which surrounds the whole circumference, or in any case the whole perimeter of the body **3** at the fan.

This transparent band portion, or making the body **3** entirely transparent, allows detecting broader ranges of the pointer **13** and therefore mounting less rigid springs **9,** thus increasing the accuracy of the meter.

A completely transparent body **3** is particularly affordable to make.

Again to increase the accuracy of the meter, advantageously, as shown in Figures **1-4****,** **7****,** the graduated scale or in any case the second series of references **17** on which the pointer **13** overlaps, extends on a significant portion of the body **3,** for example on at least one twelfth, more preferably on at least one tenth, more preferably on at least one eighth, and even more preferably on at least one sixth of the perimeter of the cross sections of the body **3.**

Advantageously, as shown in Figures **5****,** **6****,** the meter **1"** is provided with a plurality of graduated scales, or in any case of second series of references **17:** each of such graduated scales or second series of references may extend on a fraction of the perimeter of the cross sections of the body **3"** which may vary from one twelfth to one sixth.

A pointer **13,** located for example on a blade of the fan **7"**, is correspondingly associated with each graduated scale or second series of references **17.**

In the embodiment of Figures **5****,** **6****,** there are obtained six graduated scales **17** on the body **3"**, the reading of which is given by six corresponding moving pointers **13,** each obtained on one of the six blades of the fan **3"**.

Preferably, the various graduated scales **17** or other second series of references **13** are offset angularly between one another, with reference to the rotation axis of the fan **7"** or of the measurement duct **5,** so as to more or less uniformly cover the whole perimeter of the cross sections of the body **3"**.

To this end, the various graduated scales **17** or other second series of references **13** are angularly offset between one another by an angle γ [gamma] equal to or greater than **10**°, more preferably equal to or greater than **20**°, even more preferably equal to or greater than **30°,** and for example is comprised between **50-70°** or equal to **60°.**

The multiplicity of graduated scales **17** and of pointers **13** allows reading the flow rate detected by observing the meter **1"** from different angles, thus allowing much more freedom in mounting it and without having to therefore look after accurately positioning the tool with respect to the rest of the duct.

According to one aspect of the invention, the meter **1** comprises a first fan holder pin **10** and a first female seat **12** in which the first fan holder pin **10** is inserted so as to fix the fan **7** to the first hub holder **8.**

Moreover, the maximum diameter of the first fan holder pin **10** in the coupling zone with the female seat **12** is equal to or less than **4** millimetres and/or **0.08** times the maximum diameter or the maximum width of the fan **7.**

Preferably, the maximum diameter of the first fan holder pin **10** in the coupling zone with the female seat **12** and/or the maximum diameter of the second fan holder pin **10'** in the coupling zone with the female seat **18** is equal to or less than **3** millimetres, more preferably equal to or less than **2** millimetres and even more preferably, equal to or less than **1.5** millimetres.

Preferably, the maximum diameter of the first fan holder pin **10** in the coupling zone with the female seat **12** and/or the maximum diameter of the second fan holder pin **10'** in the coupling zone with the female seat **18** is equal to or less than **0.06** times the maximum diameter or maximum width of the fan **7.**

Such maximum diameter is more preferably equal to or less than **0.04** times, and even more preferably equal to or less than **0.03** times the maximum diameter or maximum width of the fan **7.**

Preferably, the first **10** and the second fan holder pin **10'** are inserted with sufficient radial and axial clearance in the respective seats **12, 18,** for example with a radial clearance of at least **0.2-0.3** millimetres.

Advantageously, the free end of the first **10, 10"** and of the second fan holder pin **10'** is rounded and convex, for example substantially spherical dome-shaped (Figure **12**).

Advantageously, the bottom of the first **12** and of the second female seat **18** is rounded and concave, for example substantially spherical sector-shaped, with average radii of curvature substantially greater than the rounded end (Figure **12**).

Such rounded forms help to significantly reduce the contact surface between the pins **10, 10', 10"** and the respective seats **12, 18,** thus reducing them to practically punctiform contact zones.

Coupling zone between the fan holder pin **10** and the relative female seat **12** is meant the stretch of pin **10** comprising all the contact zones with the surface of the seat **12.**

The diameter or maximum width of the fan **7** is measured according to a direction orthogonal to the rotation axis AR of the fan itself.

As in the embodiments of Figures **1-6****,** the first fan holder pin **10** may be obtained on the same hub **72** as the fan **7,** and the first female seat in which the pin **10** is inserted may be obtained on the first hub holder **8.**

As in the embodiments of Figures **1-11****,** the meter **1'** may be provided with a first hub holder frame **14** on which there are obtained the first hub holder **8,** a fixing band or ring **20** and the arms **11** which fix the first hub holder **8** to the fixing band.

The fixing band or ring **20** fixes the hub holder frame **14** to the meter body **3.**

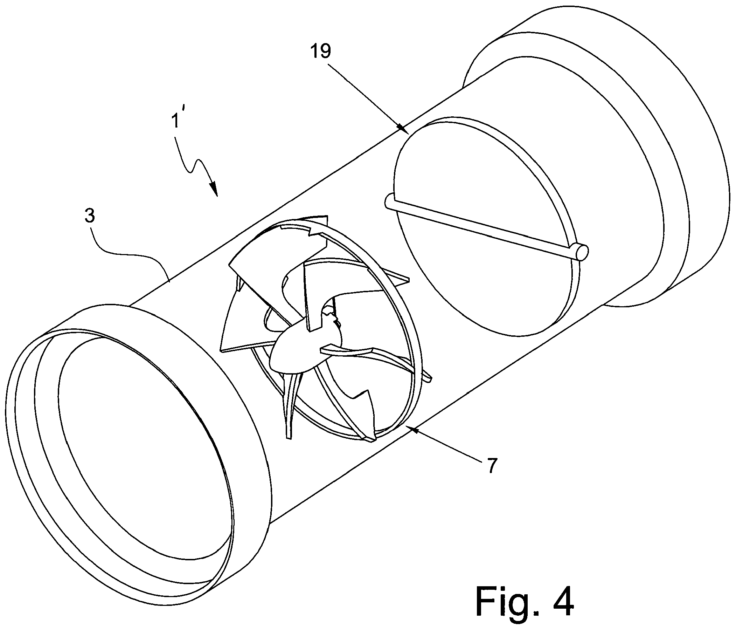

Advantageously, the meter **1** is provided with one or more flow regulators **19** provided for example, with a throttle (Figure **4**), an iris diaphragm or with other devices adapted to throttle the passage section of the measurement duct **5** upstream or downstream of the fan **7** in an adjustable manner: such flow regulators are preferably housed within the body **3** of the meter.

Such flow regulators are preferably arranged downstream of the fan **7** so as to have less of an effect on the efficiency of the fan, and therefore the accuracy of the measurement, as the level of opening of the flow regulators themselves varies.

The open ends of the body **3** have preferably inner diameters - or in any case maximum widths - D**2**, D**3** which are not very dissimilar from the inner diameters - or in any case maximum widths - D**1** of the cross sections of the innermost stretches of the measurement duct **5** (Figure **1**).

To this end, the diameters D**2**, D**3** are preferably comprised between **0.7-1.5** times, and more preferably comprised between **0.8-1.2** times the average of the inner diameters D**1** of the cross sections of the innermost stretches of the measurement duct **5.**

Preferably, the measurement duct **5** substantially has a constant inner diameter D**1**.

Such values of the diameters D**1**, D**2** and D**3** reduce the load losses of the flow of air to be measured that laps the fan, making the meter **1** more accurate and disturb less the flow of air to be measured in the ducts upstream or downstream the meter **1** itself.

Preferably, the diameter D**1** is close to the outer diameter D**4** of the fan **7,** and for example is comprised between **1.01-1.3** times, and more preferably is comprised between **1.01-1.2** times the diameter D**4** of the fan **7.**

The open ends of the body **3** are preferably provided with suitable coupling systems arranged to fix the flow meter **1** at two stretches, upstream and downstream, of a connecting pipe of the ventilation system to be regulated.

These coupling systems may comprise for example, flanges, tabs, O-rings or other sealing gaskets made of elastomeric material, snapping or bayonet quick locks.

Both the meter body **3** and the fan **7** may be made for example, of plastic material; alternatively the fan may be made for example, of a metallic material, for example, a suitable aluminium alloy.

As in the embodiment of Figures **7-11****,** a flow meter **1**^{III} according to the invention advantageously is provided with a second hub holder **16,** a second fan holder pin **10'** and a second female seat **18** in which the second fan holder pin **10'** is inserted fixing the fan to the second hub holder **16** so that the fan **7'** can rotate on itself around the aforesaid predetermined rotation axis AR.

The first **10** and the second fan holder pin **10'** are preferably coaxial.

As in the embodiment of Figures **7-11****,** the first fan holder pin **10** may be obtained on the first hub holder **8',** the first female seat **12** in which the first pin **10** is inserted and the second fan holder pin **10'** may be obtained on the hub **72'** of the fan **7',** and the second female seat **18** may be obtained in the second hub holder **16.**

However, in other embodiments not shown:
- both the first **10** and the second fan holder pin **10'** may be obtained on the hub **72',** and the first **12** and the second female seat **18** may be obtained respectively in the first **8'** and in the second hub holder **16;** or
- the first **10** and the second fan holder pin **10'** may be obtained respectively in the first **8'** and in the second hub holder **16,** while the first **12** and the second female seat **18** may be obtained both on the hub **72'.**

As in the embodiments in Figures **7-11****,** the meter **1**^{III} may be provided with a second hub holder frame **14'** on which there are obtained the second hub holder **16,** a fixing band **20'** and the arms **11'** which fix the second hub holder **16** to the fixing band **20'.**

The fixing band **20'** fixes the hub holder frame **14'** to the meter body **3.**

As in the embodiment of Figures **7-11****,** the first **10** and the possible second fan holder pin **10'** may have overall substantially the shape of a tapered shaft, that is a cylindrical shape with a slight tapering; however, in other embodiments not shown, the first **10** and the possible second fan holder pin **10'** may have an overall shape selected from among the following:
substantially cylindrical, prismatic, conical, pyramidal, truncated pyramidal, frusto-conical, tapered (Figure **12**) or non-tapered shaft, shaped as the head of a ball pin, ogival, ball, dome or hemisphere, in the form of a stud, in a pointed form or solid of revolution.

Advantageously, also the first **12** and the second female seat **18** may have substantially tapered form and that narrows progressively from the mouth towards the bottom (Figure **12**).

In Figure **12****,** the taper angle of the first **10** and of the second fan holder pin **10'** is indicated with reference θ**1** [THETA**1**], while the taper angle of the first **12** and of the second female seat **18** is indicated with the reference θ**2** [THETA**2**].

Advantageously, the taper angle θ**1** of the first **10, 10"** and of the possible second fan holder pin **10'** substantially is smaller than the taper angle θ**2** of the first **12** and possible second female seat **18.**

Preferably, the taper angle θ**2** exceeds the angle θ**1** by at least **3**°, more preferably by at least **4**°.

The length LP of the coupling stretch of the first **10, 10**" and of the possible second fan holder pin **10'** may be for example, comprised between about **2** and **3** mm, and/or comprised between **0.02** and **0.06** times the maximum diameter or maximum width of the fan **7.**

Preferably, the first **10, 10**" and/or the possible second fan holder pin **10'** and/or the surface of the seats **12, 18** in which the pins **10, 10'**, **10**" are inserted and with which they couple, are made of one or more materials selected from the following group: a plastic material, acrylonitrile-butadiene-styrene (ABS), polyamide (nylon), an acetal resin (POM-C), possibly loaded with polytetrafluoroethylene (PTFE) or other fluorinated polymers, a metallic material.

Advantageously, the first **12** and the second female seat **18** are obtained for example, in a sliding bearing; however, in other embodiments not shown, the first **12** and the second female seat **18** may be obtained each for example, in a rolling bearing.

If the first **10** and the possible second fan holder pin **10**" are mounted on rolling bearings, the maximum diameters thereof in the coupling zone with such bearings preferably are equal to or less than **15** millimetres, and more preferably equal to or less than **10** millimetres.

Preferably, the spring or other elastic element **9** has a relatively low rigidity so as to increase the sensitivity and accuracy of the meter **1.**

To this end, the ratio between the rigidity KR and the inner diameter of the measurement duct preferably is comprised between **8*10⁻⁷** N/(mm³*sexagesimal degree) and **8*10⁻⁵** N/(mm³*sexagesimal degree), and more preferably is comprised between **4*****10⁻⁶** N/(mm³*sexagesimal degree) and **12*10⁻⁶** N/(mm³*sexagesimal degree), where the rigidity KR of the elastic element **9** is defined as the ratio between the twisting torque that the element **9** applies on the fan **7** and the angular movement of the fan **9** around the axis AR.

In one embodiment not shown, the first **14** and/or the second hub holder frame **14'** advantageously may be inserted in the body **3** with a slight forcing so as to be inserted in the body **3** and then rotated around the rotation axis AR without extracting them from the body **3,** thus ensuring that when the spring **9** is resting, the moving pointer **13** indicates the zero position on the graduated scale **17,** that is the absence of flows which activate the fan, so as to compensate each time for the production tolerances of the spring **9** or other elastic element.

By doing this, calibrated meters **1** may be manufactured in series with significant accuracy despite the relatively broad production tolerances of the springs **9,** for example rigidity or form tolerances; to this end, it is worth pointing out that the usual rigidity tolerances of a spiral spring are so broad as to be limited within a variation of approximately **7**% or **8**% only following a very costly selection, such as to be unfeasible in the production of a usual low-cost product such as the flow meter **1.**

Once force fitted in the body **3,** the first **14** and/or the second hub holder frame **14'** may be rotated for example, with a suitable manual or motorized tool (not shown), which may be provided for example with a gripping head which substantially replicates the mould of the first **14** and/or of the second hub holder frame **14**', thus allowing to apply relatively high torques thereto despite the frames **14, 14'** being relatively fragile.

In order to rotate the first **14** and/or the second hub holder frame **14'** once fitted into the body **3,** the outer surface of the fixing bands or rings **20, 20'** that comes in contact with the inside of the body 3 may have a specifically selected surface roughness, with a value Ra for example comprised between **0.1-1** mm, or between **0.3-0.8** mm.

Alternatively, the angular position of the first **14** and/or of the second hub holder frame **14'** may be determined by suitable mechanical abutments or male/female couplings obtained on the first **14** and/or second hub holder frame **14'** and/or on the body **3.**

For example, in an embodiment not shown, the first **14** and/or the second hub holder frame **14'** and the body **3** may be shaped so as to achieve a millerays coupling or there may be obtained, on the outer surface of the fixing bands or rings **20, 20',** a series of suitable radial protrusions **200** which abut against respective notches of the body **3** (Figure **13**), or vice versa there may be obtained, on the inner surface of the body **3,** a series of suitable radial protrusions which abut against respective notches made on the bands or fixing rings **20, 20'** so that the radial protrusions and notches set a series of angular positions of the frames **14, 14'** with respect to the body **3** and to the axis AR, which are offset preferably by about no more than **5°** one from the successive, more preferably no more than **3°,** more preferably no more than **2°** and even more preferably no more than **1°.**

The protrusions **200** may have a height, for example of **0.5-2** millimetres in radial direction; therefore in order not to damage them irreversibly, during the mounting of a meter **1,** an operator may remove the fixing bands or rings **20, 20'** from the body **3,** rotate them slightly and reinsert them back into the body **3** up to finding a suitable angular position of the frames **14, 14'.**

Advantageously, the protrusions **200** form inclined surfaces or planes which allow rotating the fixing bands or rings **20, 20'** also without removing them from the body **3.**

To this end, in the embodiment, the protrusions **200** substantially have triangular sections but may clearly have for example, substantially trapezoidal forms or blunt-curve forms.

An example of use of the flow meter **1** described above is now disclosed.

By means of the aforesaid coupling systems, the ends of the body **3** of the meter are connected to the two upstream and downstream stretches of a duct of a ventilation system, the air flow rate of which is desired to be measured.

The flow of air introduced within the measurement duct 5 generates a lift on the blades **70.**

The results of the lifts on the various blades gives rise to a drive torque which causes the fan **7** to rotate around the axis AR, stressing progressively the spring **9,** which applies a progressively increasing elastic resistance torque to the fan **7.**

When the elastic resistance torque exerted by the spring equals the drive torque generated by the flow of air that hits the fan, the rotation of the fan around the axis AR stops after having covered an angle γ

(gamma), which is proportional or in any case dependent on the entity of the flow of air flowing in the measurement duct **5.**

The position of the pointer **13** on the graduated scale **17** allows immediately reading the measurement of the flow rate in the measurement duct **5.**

The meter **1** described above is therefore a tool having quite a simple and affordable mechanical construction, and allows measuring the flow rates of air running through the various ducts of a ventilation system or of a heating or air conditioning system with sufficient accuracy.

Being in the range of approximately **10-15**%, the margin of error of the meter **1** is more than acceptable in most cases which may occur during the regulation of a system.

The aforesaid differences between the tapering angles, the diameters and the rather small lengths of the fan holder pins **10, 10', 10"** and of the seats **12, 18** thereof drastically reduce the contact surfaces between pins and female seats, which are reduced almost to punctiform contact zones, and equally reduce the friction that tends to brake the rotation of the fan **7,** thus significantly increasing the sensitivity, response speed and measurement accuracy of the flow meter **1, 1', 1", 1**^{III} and significantly facilitating the regulation thereof.

Indeed, the significance of sticking and stick-slip events between pins and seats is significantly reduced, and in general the snapping movements of the fan **7** and of the moving pointer **13,** thus reducing the angular positioning errors of the moving pointers **13** along the graduated scale **17.**

Also the relatively large sizes of the measurement duct **5** contribute to making the flow meter **1, 1', 1"**, **1**^{III} particularly accurate and suitable for measuring flow rates of air and other aeriform fluids.

The meter **1** is also extremely simple to use and does not require power supply.

The measuring accuracy of the flow meter **1, 1', 1**" and in particular of **1**^{III} substantially is not affected by the orientation with which the flow meter itself is mounted, and in particular is not affected by the fact that the axis of the fan (**7**, **7**') is vertical, horizontal or variously inclined with respect to the vertical.

The shape described above of the blades **70,** and of the fan in general, significantly improves the mechanical efficiency of the latter, while at the same time increasing the accuracy and sensitivity of the meter: indeed, to generate the drive torque on the fan, there is a need for a particularly low loss of load in the flow of air to be measured, and therefore the variation that the meter **1** causes on the same flow rate to be measured, is reduced.

The use of an impeller coupled to a spiral spring gives the tool a relatively high measuring accuracy over a field of relatively very broad flow rates, for example with respect to tools that measure a flow rate as a function of how much the flow of liquid or of fluid to be measured causes a door (flow meters with a door, flap flowmeters) to open.

Also the orientation of the rotation axis AR of the fan longitudinal to the measurement duct **5** contributes to increasing the measuring accuracy of the tool **1,** thus making it particularly suitable for measuring flow rates of aeriform fluids.

"Longitudinal" in the present description means that the rotation axis AR of the fan has an inclination that is not greater than **45**° with respect to the axis of the measurement duct **5** in the stretch in which the fan **7** is.

The flow regulators **19** allow simpler vents with no regulation to be installed in the environments, and therefore much less costly: indeed, since the flow regulators **19** are much less costly, they may be permanently left mounted in the ventilation system, therefore performing the function of throttles both for permanently measuring and viewing the flow rates in the various ducts.

The regulators **19** allow also calibrating a ventilation system in a much easier and quicker manner with respect to current flow meters.

When several deliveries are regulated in parallel, throttling one varies the flow distributed by the others and the overall flow distributed.

With the current relatively costly flow meters, in order to regulate and balance the flow of air of the various vents, the operator measures and regulates the flow rates one at a time, going from one room to the next with a portable meter, gradually and repeatedly on all the vents with a great waste of time.

Since they may be manufactured at rather low costs, several flow meters **1** according to the invention advantageously may be arranged close to one another on various branches of a collector and close to the collector itself so as to be able to read and regulate all flow rates without changing rooms, and especially to exactly measure the overall flow rate at all times.

The embodiments described above are susceptible to various modifications and variations without departing from the scope of protection of the present invention.

For example, in the embodiment of the meter **1**^{IV} in Figure **14****,** the pointer **13** or the graduated scale or other set of references **17** is obtained on an adjustment element **74** fixed integrally, for example hooked, force fitted or interlocked, on the meter body **3**^{IV} or on the fan **7** so as to be moved in a reversible manner to execute the initial calibration of the meter before use, thus compensating for the aforesaid production tolerances of the spring **9,** similar to that described above concerning the first **14** and the second hub holder frame **14'.**

In the embodiment of Figure **14****,** the adjustment element **74** is fixed outside the body **3**^{IV}, but in an embodiment not shown, it may be inserted within the body **3**^{IV}.

The calibration and recovery systems of the tolerances on the rigidity of the spring **9** described above and based on the first **14** and second hub holder frame **14'** and on the adjustment element **74,** may be made also in flow meters **1** which do not show the features of claim **1.**

Moreover, all the details can be replaced by technically equivalent elements.

For example, the materials used, as well as their sizes, can be of any type according to the technical requirements.

It is to be noted that the expression "A *comprises* B, C, D" or "A *is formed by* B, C, D" comprises and describes also the particular case in which "A *consists of* B, C, D".

The examples and lists of possible variants of the present application are to be intended as not exhaustive listings.

## Claims

1. Flow meter for aeriform substances (**1, 1'**, **1**", **1**^{III}, **1**^{IV}), comprising:
- a meter body (**3**, **3**^{III}) in which a measurement duct (**5**) is obtained;
- a fan (**7**) housed in the measurement duct (**5**) and fixed to at least a first hub holder (**8**) so as to be able to rotate on itself around a predetermined rotation axis (AR) longitudinal to the measurement duct (**5**);
- an elastic element (**9**);
- a moving pointer (**13**) integral with the fan or with the body (**3**) of the meter; and
- a graduated scale or other set of references (**17**), integral with the body (**3**) of the meter or with the fan respectively;
and wherein:
- the meter (**1**) is arranged so that the flow of a aeriform fluid flowing in the measurement duct (**5**) applies an overall torque to the fan (**7**), such torque tending to rotate the fan (**7**) around the predetermined rotation axis (AR) stressing and deforming the elastic element (**9**), and the latter being deformed counters such rotation or tendency to rotation;
- at least one of the moving pointer and the graduated scale or other set of references (**17**) is housed within the measurement duct (**5**);
- the moving pointer (**13**) is arranged to be positioned along the graduated scale or along the other set of references (**17**) as a function of the position (γ) the fan (**7**) takes at equilibrium between the torque applied to the fan (**7**) by the flow of aeriform fluid that runs through the measurement duct (**5**), and the resistance torque applied to the fan (**7**) by the elastic element (**9**) ;
- the meter (**1**) comprises a first fan holder pin (**10**, **10"**) and a first female seat (**12**) in which the first fan holder pin is inserted fixing the fan (**7**) to the first hub holder (**8**);
- the maximum diameter of the first fan holder pin (**10, 10"**) in the coupling zone with the first female seat (**12**) is equal to or less than **4** millimetres and/or **0.08** times the maximum diameter or the maximum width of the fan (**7**).

2. Flow meter (**1, 1', 1", 1**^{III}, **1**^{IV}) according to claim **1,** comprising:
- a second hub holder (**16**);
- a second fan holder pin (**10'**) and a second female seat (**18**) that receives the second fan holder pin (**10'**) fixing the fan to the second hub holder (16) so that the fan (**7**) can rotate on itself around the aforesaid predetermined rotation axis (AR);
and wherein the maximum diameter of the second fan holder pin (**10'**) in the coupling zone with the second female seat (**18**) is possibly equal to or less than **4** millimetres and/or **0.08** times the maximum diameter or the maximum width of the fan (**7**).

3. Flow meter (**1, 1', 1", 1**^{III}, **1**^{IV}) according to claim **1** or **2,** wherein the maximum diameter of the first fan holder pin (**10, 10"**) in the coupling zone with the first female seat (**12**), and/or the maximum diameter of the second fan holder pin (**10'**) in the coupling zone with the second female seat (**18**) are equal to or less than **1.5** millimetres and/or **0.03** times the maximum diameter or the maximum width of the fan (**7**)

4. Flow meter (**1, 1', 1", 1**^{III}, **1**^{IV}) according to claim **1,** wherein the first (**10, 10'**) and/or the possible second fan holder pin (**10'**) has one or more forms selected from the following group: substantially cylindrical, prismatic, conical, pyramidal, truncated pyramidal, frusto-conical, tapered or non-tapered shaft, in the form of the head of a ball pin, ogival, ball, dome or hemisphere, in a pointed form, in the form of a stud or solid of revolution.

5. Flow meter (**1, 1', 1", 1**^{III}, **1**^{IV}) according to claim **1,** wherein:
- the first fan holder pin (**10, 10"**) and the respective first female seat (**12**) and/or the possible second fan holder pin (**10'**) and the respective second female seat (**18**) have a substantially tapered form, for example substantially conical or frusto-conical;
- the first (**10, 10"**) and the possible second fan holder pin (**10'**) have a taper angle (THETA**1**) substantially smaller than the taper angle (THETA**2**) of the respective first (**12**) and possible second female seat (**18**).

6. Flow meter (**1, 1', 1", 1**^{III}, **1**^{IV}) according to claim **1,** wherein at least one of the first (**10, 10"**) and the possible second fan holder pin (**10'**) and/or the surface of the female seat (**12, 18**) with which such pin (**10, 10', 10"**) is coupled are made of one or more materials selected from the following group: a plastic material, a metal, acrylonitrile-butadiene-styrene, polyamide, an acetal resin, possibly loaded with polytetrafluoroethylene or other fluorinated polymers.

7. Flow meter (**1, 1', 1", 1**^{III}, **1**^{IV}) according to claim **1,** comprising at least one first hub holder frame (**14**) on which the first hub holder (**8**) is obtained or however integral, and wherein:
- the body (**3**) encloses the first hub holder frame (**14**);
- the first hub holder frame (**14**) is arranged to engage with the body (**3**) with a plurality of abutments and/or couplings of protrusions and recesses that engage with each other positioning the first hub holder frame (**14**) each in a predetermined angular position with respect to the body (**3**) and the predetermined rotation axis (AR).

8. Flow meter (**1, 1', 1", 1**^{III}, **1**^{IV}) according to claim **7,** wherein at least one first predetermined angular position is offset at least with respect to an adjacent second predetermined angular position of no more than **5°**, with reference to the predetermined rotation axis (AR).

9. Flow meter (**1, 1', 1", 1**^{III}, **1**^{IV}) according to claim **1,** comprising a flow regulator (**19**) arranged to vary the through section of the measurement duct (**5**) in a reversible manner, wherein the flow regulator can comprise for example a throttle, an iris choke or other choke.

10. Ventilation system for buildings, comprising:
- a fan;
- at least one collector;
- a plurality of air ducts arranged to convey the air blown by the fan and fed in parallel by the collector;
- a plurality of flow meters (**1**, **1'**, **1**", **1**^{III}, **1**^{IV}) having the features according to claim 1, each of which mounted permanently, during the normal conditions of use of the system itself, along one of the air ducts so as to measure the flow of air which runs through the duct itself.

11. Process for measuring the flow of a aeriform fluid in a duct to be measured, comprising the following operations:
- arranging a meter (**1, 1'**, **1", 1**^{III}, **1**^{IV}) having the features according to claim **1;**
- introducing a flow of aeriform fluid to be measured in the measurement duct (**5**);
- detecting the angular position (γ) the fan (**7**) takes at equilibrium between the torque applied to the fan (**7**) by the flow of aeriform fluid that runs through the measurement duct (**5**), and the resistance torque applied to the fan (**7**) by the elastic element (**9**);
- obtaining the measurement of the flow rate of aeriform fluid that flows in the measurement duct (**5**) from the angular position (γ).

12. Process for manufacturing a meter (**1, 1'**, **1**", **1**^{III}, **1**^{IV}) having the features according to one or more preceding claims, wherein the meter (**1**) comprises at least one first hub holder frame (**14**) on which the first hub holder (**8**) is obtained or however integral, the graduated scale or other set of references (**17**) defines a zero position intended to indicate that the fan (**7**) is in an angular position such as not to stress the elastic element (**9**), and the process comprises the following operations:
S**.1**) arranging the meter body (**3**), the first hub holder frame (**14**), the fan (**7**), the elastic element (**9**), the moving pointer (**13**) and the graduated scale or other set of references (**17**);
S.**2**) force fitting the first hub holder frame (**14**) in the body (**3**);
S.**3**) rotating the first hub holder frame (**14**) with respect to the body (**3**) and the predetermined rotation axis (AR) so that when the fan (**7**) is in an angular position such as not to stress the elastic element (**9**) the moving pointer (**13**) is substantially at the graduated scale or other set of references (**17**).

13. Process according to claim **12,** wherein in the operation S.**3**) the first hub holder frame (**14**) is rotated with respect to the body (**3**) and the predetermined rotation axis (AR) with substantial forcing.

14. Process for manufacturing a meter (**1, 1'**, **1**", **1**^{III}, **1**^{IV}) having the features according to one or more preceding claims, wherein the meter (**1**) comprises an adjustment element (**74**) forming the moving pointer (**13**) or the graduated scale or other set of references (**17**), the graduated scale or other set of references (**17**) defines a zero position intended to indicate that the fan (**7**) is in an angular position such as not to stress the elastic element (**9**), and the process comprises the following operations:
S.**1**) arranging the meter body (**3**), the adjustment element (**74**), the fan (**7**), the elastic element (**9**), the moving pointer (**13**) and the graduated scale or other set of references (**17**);
S.**2**) force fitting the adjustment element (**74**) in or on the body (**3**) or in or on the fan (**7**);
S.**3**) rotating the adjustment element (**74**) with respect to the body (**3**) or the fan (**7**) and the predetermined rotation axis (AR) such that when the fan (**7**) is in an angular position such as not to stress the elastic element (**9**) the moving pointer (**13**) is substantially at the graduated scale or other set of references (**17**).

15. Process according to claim **14,** wherein in the operation S.**3**) the adjustment element (**74**) is rotated with respect to the body (**3**) or the fan (**7**) and the predetermined rotation axis (AR) with substantial forcing.
